# EUROPÄISCHE PATENTSCHRIFT

(11) **EP 1 328 776 B1**
(45) Veröffentlichungstag und Bekanntmachung des Hinweises auf die Patenterteilung: **17.02.2016**
(21) Anmeldenummer: 01992873.8
(22) Anmeldetag: 20.10.2001
(51) Int. Cl.: G01D 9/00, G01F 23/18, G01F 23/284

(54) **VORRICHTUNG ZUR BESTIMMUNG UND/ODER ÜBERWACHUNG EINER PROZESSVARIABLEN**
DEVICE FOR DETERMINING AND/OR MONITORING A PROCESS VARIABLE
DISPOSITIF POUR DETERMINER ET/OU SURVEILLER UNE VARIABLE DE PROCESSUS

(30) Priorität: 24.10.2000 DE 10052836
(43) Veröffentlichungstag der Anmeldung: 23.07.2003
(73) Patentinhaber: Endress + Hauser GmbH + Co. KG, 79689 Maulburg (DE)
(72) Erfinder: BOLDT, Matthias, 79540 Lörrach (DE); ERDMANN, Frank, 79183 Waldkirch (DE); PANKRATZ, Klaus, 79400 Kandern (DE); VON STEIN, Bert, 79183 Waldkirch (DE); SPANKE, Dietmar, 79585 Steinen (DE)
(74) Vertreter: Andres, Angelika Maria
(86) Internationale Anmeldenummer: PCT/EP2001/012152
(87) Internationale Veröffentlichungsnummer: WO 2002/037061

(56) Entgegenhaltungen:
- EP-A- 0 346 685
- DE-A- 19 860 901
- GB-A- 2 296 971
- GB-A- 2 342 453
- US-A- 6 122 959

## Beschreibung

Die Erfindung bezieht sich auf eine Vorrichtung zur Bestimmung und/oder Überwachung des Füllstands eines Mediums in einem Behälter.

Bekannte Meßgeräte zur Bestimmung und/oder Überwachung einer beliebigen Prozeßvariablen (z. B. Füllstand, Druck, Temperatur, Durchfluß) in der industriellen Meßtechnik sind so ausgestaltet, daß jeweils nur der aktuelle Meßwert gespeichert und zur Verfügung gestellt wird. Allerdings ist die Bereitstellung des aktuellen Meßwertes zur Diagnose, zur Fehlererkennung und zu Zwecken des Predictive Maintenance in den seltensten Fällen ausreichend.

Für die Diagnose und Fehlerfrüherkennung ist es vielmehr notwendig, daß Meßwert- und/oder Systeminformation über einen längeren Zeitraum aufgezeichnet wird, so daß sie bei Bedarf abgerufen und ausgewertet werden kann.

Bislang ist es lediglich bekannt geworden, einen sog. Datenlogger im Bedarfsfall an das eigentliche Meßgerät anzuschließen. Der Datenlogger ist in der Lage, die Meßdaten über einen gewünschten Zeitraum aufzuzeichnen und bereitzustellen. Gebräuchliche Datenlogger werden u.a. von der Firma Endress+Hauser Wetzer GmbH + Co. KG angeboten und vertrieben. Diese Datenlogger werden beispielsweise dann eingesetzt, wenn eine Fehlfunktion des Gerätes vermutet wird. Anhand der von dem Datenlogger über die Zeit aufgezeichneten Meß- bzw. Systemdaten kann eine Fehlerdiagnose durchgeführt werden. Bis zur tatsächlichen Lokalisierung der an dem Meßgerät auftretenden Fehlfunktion kann jedoch mitunter viel Zeit vergehen.

Die Fehlererkennung ist besonders schwierig, wenn eine Fehlfunktion nur zeitweise, beispielsweise in unregelmäßigen Intervallen, auftritt. Hier kann der unerwünschte Fall auftreten, daß die Fehlfunktion in dem aktuellen Meßzeitraum, in dem der Datenlogger Meß- und/oder Systemdaten aufzeichnet, nicht erkennbar wird. Die Meßvorrichtung arbeitet dann während der Aufzeichnung der Meßdaten fehlerfrei; es kann jedoch vorkommen, daß die Fehlfunktion in der nahen Zukunft wiederholt auftritt und dann im Extremfall durch einen abermaligen Check über den Datenlogger wiederum nicht lokalisierbar ist.

Bei der bekannten Analyse unter Zuhilfenahme eines Datenloggers, der nur zeitweise an das Meßsystem angeschlossen ist, besteht also die Gefahr, daß trotz einer Vielzahl von Überprüfungen eine zeitweise auftretende Fehlfunktion des Meßgerätes nicht erkannt und folglich nicht behoben werden kann. Die im Stand der Technik praktizierte Methode ist daher unwirtschaftlich und kann in kritischen Anwendungsfällen sogar gefährlich sein. Als Beispiel für einen kritischen Anwendungsfall sei ein zeitweise auftretender Defekt an einer Überfüllsicherung genannt, die in einem Tank montiert ist, in dem gesundheitsschädliche Chemikalien gelagert sind.

Der Erfindung liegt die Aufgabe zugrunde, eine kostengünstige, bedienerfreundliche und zuverlässige Vorrichtung zur Bestimmung und/oder Überwachung des Füllstands eines Mediums in einem Behälter vorzuschlagen.

Die Aufgabe wird durch die Vorrichtung nach Anspruch 1 gelöst. Da die erfindungsgemäße Vorrichtung Meß- und Systemdaten kontinuierlich aufzeichnet, lassen sich beliebige Ereignisse diagnostizieren. Bei einem solchen Ereignis handelt es sich beispielsweise um eine temporär oder schleichend auftretende Fehlfunktion des Meßgeräts. Sobald z. B. eine zeitweise Fehlfunktion auftritt, so kann diese nachfolgend mit hoher Zuverlässigkeit anhand der aufgezeichneten Daten erkannt und entsprechend behoben werden. Es kann sich jedoch auch - wie später noch ausgeführt wird - bei dem Ereignis um die aktuelle oder zeitlich variierende Darstellung eines Meßwertes handelt.

Bei dem zu bestimmenden oder zu überwachenden Ereignis handelt es sich ganz allgemein gesprochen um den Ablauf eines vorgegebenen Zeitintervalls bzw. eines vorgegebenen Zeit-schemas. Weiterhin kommt - wiederum allgemein gesprochen - als zu bestimmendes oder zu überwachendes Ereignis das Erreichen eines definierten Meßwertzustandes oder das Erreichen eines definierten System- oder Fehlerzustandes in Frage.

Eine vorteilhafte Ausführungsform der erfindungsgemäßen Vorrichtung sieht vor, daß in der Speichereinheit sowohl die aktuellen Meßwert- und/oder Systeminformationen abgespeichert werden als auch die entsprechenden Meßwert- und/oder Systeminformationen, die innerhalb eines definierten zurückliegenden Zeitbereichs aufgetreten sind. Die zuletzt genannten Meßwert- und Systeminformationen werden nachfolgend als Historiendaten bezeichnet.

Damit die Meß-/Regel-/Steuereinheit Daten mit einer entfernten Kontrollstelle austauschen bzw. mit ihr kommunizieren kann, ist gemäß einer bevorzugten Weiterbildung der erfindungsgemäßen Vorrichtung ein Bussystem vorgesehen. Für den Datenaustausch kommen alle bekannten Kommuni-kationsstandards in Frage. Beispielhaft seien der Profibus PA - Standard oder der Fieldbus Foundation - Standard genannt. Insbesondere ist vorgesehen, daß sowohl die aktuellen Daten als auch die Historiendaten über das Bussystem an die entfernte Kontrollstelle übertragen werden.

Gemäß einer bevorzugten Ausgestaltung der erfindungsgemäßen Vorrichtung ist die Speichereinheit für die Historiendaten als entnehmbare Kompakteinheit ausgestaltet. Diese Ausgestaltung ermöglicht es, ein und dieselbe Speichereinheit für eine Vielzahl von Meßgeräten zu verwenden. Hierdurch lassen sich die Kosten für die erfindungsgemäße Vorrichtung senken. In der Kompakteinheit kann als Speichereinheit beispielsweise ein EE-Prom, eine Festplatte oder ein flüchtiges Speicherbauteil eingesetzt werden.

Gemäß einer vorteilhaften Weiterbildung der erfindungsgemäßen Vorrichtung ist an der Meß-/Regel-/Steuereinheit eine Schnittstelle vorgesehen, über die wahlweise eine Ein-/Ausgabeeinheit oder die Speichereinheit für die Historiendaten mit der Meß-/Regel-/Steuereinheit verbindbar ist. Diese Ausgestaltung der Erfindung ist insofern besonders günstig, da eine Speichereinheit in Verbindung mit einer Vielzahl von Vorrichtungen zur Bestimmung und/oder Überwachung einer Prozeßvariablen genutzt werden kann. Eine besonders bevorzugte Ausführungsform sieht vor, daß die Meß-/Regel-/Steuereinheit anhand der Historiendaten, die die Speichereinheit bereitstellt, eine Fehleranalyse und/oder Ursachenanalyse und/oder eine Vorsorgeanalyse durchführt und das Ergebnis der Analysen dem Bedienpersonal zur Verfügung stellt. Die Analysedaten werden dem Bedienpersonal beispielsweise an einem Vorort-Bildschirm angezeigt.

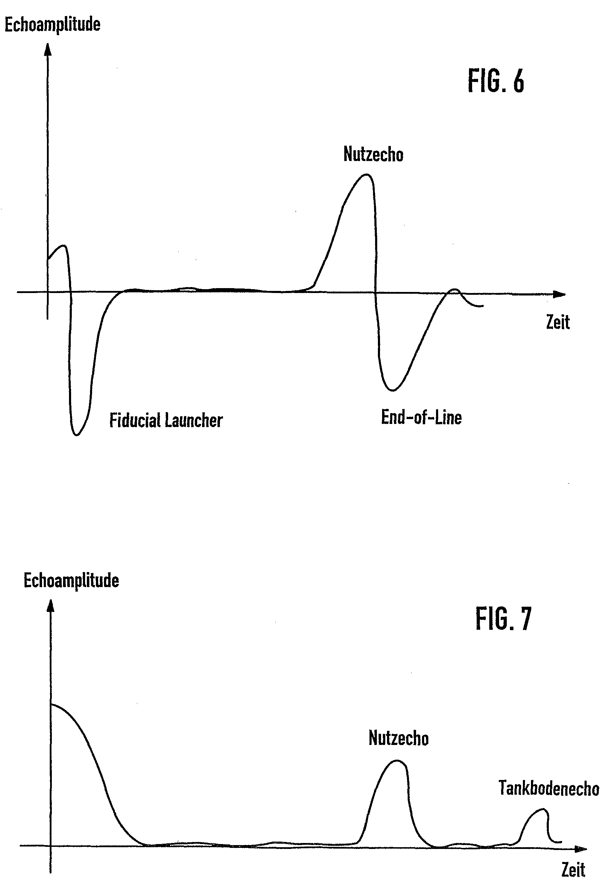

Die Ausgabeeinheit ist so ausgestaltet, daß sie eine pixel-orientierte Darstellung von aktuellen Meßdaten, von Zwischenergebnissen, von Histöriendaten und/oder Analysedaten bereitstellt. Dem Bedienpersonal werden z. B. bei Füllstandsmessungen über ein Laufzeitverfahren die aktuellen Meßdaten in Form der sog. Echokurve übermittelt. Die Echokurve verkörpert die Amplituden der Echosignale in Abhängigkeit von der Laufzeit bzw. dem Laufweg. Selbstverständlich kann es sich bei der Darstellung der aktuellen Meßdaten, die anhand eines Laufzeitverfahrens gewonnen werden, auch um die Darstellung einer Größe handeln, die aus der Echokurve abgeleitet ist. Als Beispiel sei die digitale Hüllkurve genannt. Typische Verläufe von Echokurven sind in den Figuren Fig. 6 und Fig. 7 gezeigt.

Als interessanter Anwendungsfall bei der Darstellung von Historiendaten sei weiterhin die zeitliche Änderung des Füllstandes eines Mediums in einem Behälter genannt. Selbstverständlich lassen sich anhand der Historiendaten u.a. auch Meßstörungen erkennen und verfolgen.

Die Erfindung wird anhand der nachfolgenden Zeichnungen näher erläutert. Es zeigt:
Fig. 1: eine schematische Darstellung einer Vorrichtung zur Füllstands-messung, die nach dem Laufzeitverfahren arbeitet,
Fig. 2: eine schematische Darstellung einer ersten Ausgestaltung der erfindungsgemäßen Vorrichtung,
Fig. 3: eine schematische Darstellung einer zweiten Ausgestaltung der erfindungsgemäßen Vorrichtung,
Fig. 4: eine schematische Darstellung einer dritten Ausgestaltung der erfindungsgemäßen Vorrichtung,
Fig. 5: eine schematische Darstellung einer vierten Ausgestaltung der erfindungsgemäßen Vorrichtung,
Fig. 6: eine Darstellung einer typischen Echokurve, wie sie bei geführten Meßsignalen auftritt, und
Fig. 7: eine Darstellung einer typischen Echokurve im Falle von frei abgestrahlten Meßsignalen.

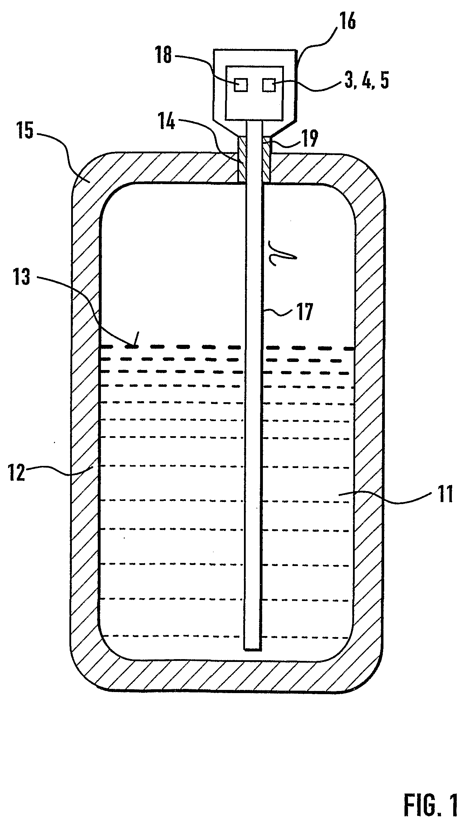

Fig. 1 zeigt eine schematische Darstellung einer Füllstandsmeßvorrichtung 16. Die Füllstandsmeßvorrichtung 16 ist in einer Öffnung 14 im Deckel 15 des Behälters 12 montiert. Zwecks Bestimmung des Füllstands des Mediums 11 in dem Behälter 12 werden hochfrequente Meßsignale an dem Oberflächenwellenleiter 17 in das Mediums 11 hineingeführt. Ein Meßsignal ist übrigens in der Fig. 1 als Hochfrequenzpuls stilisiert dargestellt. Die Meßsignale werden in der Signalerzeugungseinheit 18 erzeugt und über die Einkoppeleinheit 19 auf den Oberflächenwellenleiter 17 eingekoppelt. Die an der Oberfläche 13 des Mediums 11 reflektierten Echosignale werden über die Einkoppeleinheit 19 der Meß-/Regel-/Steuereinheit 3 zugeführt. Anhand der Laufzeit und in Kenntnis der Höhe des Behälters 12 errechnet die Meß-/Regel-/Steuereinheit 3 u.a. den Füllstand des Mediums 11 in dem Behälter 12.

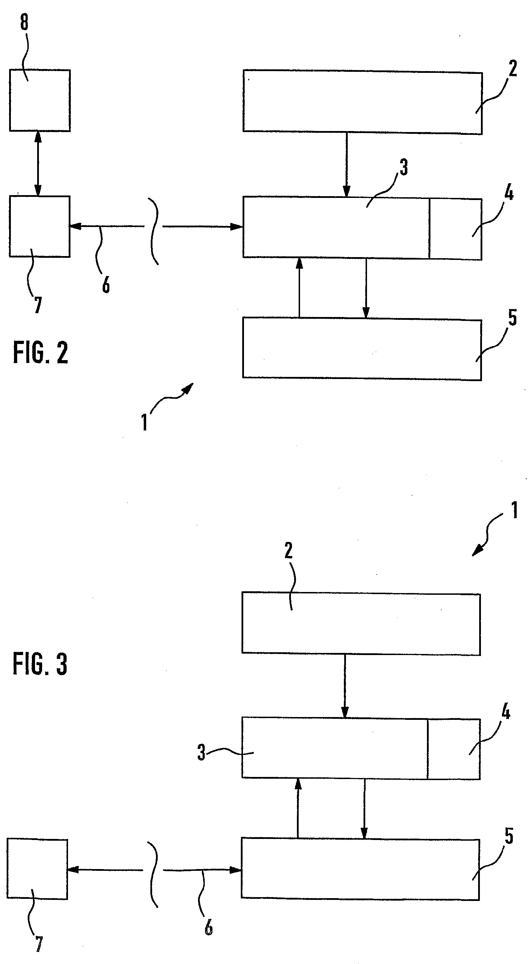

In Fig. 2 ist schematisch eine erste Ausgestaltung der erfindungsgemäßen Vorrichtung dargestellt. Anhand der Meßdaten, die von dem Sensor 2, beispielsweise dem in Fig. 1 dargestellten Füllstandssensor 16, zur Verfügung gestellt werden, bestimmt die Meß-/Regel-/Steuereinheit 3 die entsprechenden aktuellen Meßwerte, beispielsweise also den aktuellen Füllstand des Mediums 11 in dem Behälter 12. Die jeweils aktuellen Meßdaten werden in der Speichereinheit 4 gespeichert. Über einen definierten Zeitraum werden die jeweils aktuellen Meßdaten in eine Speichereinheit für Historiendaten 5, in den sog. Historienspeicher, geschrieben. Anhand der Historiendaten ist es z. B. möglich, eine Fehlerdiagnose oder eine Ursachenanalyse für kurz- oder langfristig auftretende Fehlfunktionen des Füllstandsmeßgeräts durchzuführen. Weiterhin können die Historiendaten zu Predictiv-Maintenance-Zwecken herangezogen werden.

Im gezeigten Ausführungsbeispiel ist die Meß-/Regel-/Steuereinheit 3 über ein Bussystem 6 mit einer entfernten Kontrollstelle 7 verbunden. Über das Bussystem 6 kommunizieren der Sensor 2 bzw. die Meß-/Regel-/Steuereinheit 3 und die Kontrollstelle 7 miteinander. Die Eingabe-/Ausgabeeinheit 8 fungiert als Schnittstelle zum Bedienpersonal: Hier können Daten abgefragt werden, es können neue Parameter eingegeben werden, usw.

Die Historiendaten werden über die Meß-/Regel-/Steuereinheit 3 aus dem Historienspeicher 5 abgerufen. Daher sind bei der in Fig. 2 gezeigten Ausgestaltung an dem Historienspeicher 5 keine zusätzlichen Anschlüsse vorzusehen. Der Anschluß kann sich vielmehr an einer beliebigen Stelle am Bussystem 6 befinden. Die in Fig. 2 dargestellte Ausführungsform ist übrigens ex-fähig, da die Kommunikation als solche ex-fähig ausgestaltet ist. Allerdings entstehen gewisse Nachteile dadurch, daß bei diesem Ausführungsbeispiel das Bussystem 6 durch die Kommunikation mit dem Historienspeicher 5 zusätzlich belastet wird.

Möchte man die Kommunikation beschleunigen, also mehr Daten pro Zeiteinheit über das Bussystem 6 übertragen, so bietet sich die in Fig. 3 dargestellte zweite Ausgestaltung der erfindungsgemäßen Vorrichtung 1 an. Bei dieser Ausgestaltung kommuniziert der Historienspeicher 5 über ein separates Bussystem 6 mit der Kontrollstelle 7. Das in der Fig. 3 nicht gesondert dargestellte Bussystem zwischen der Meß-/Regel-/Steuereinheit 3 und der Kontrollstelle wird also nicht durch eine überlagerte Kommunikation mit dem Historienspeicher 5 belastet. Ein Nachteil dieser Ausgestaltung ist allerdings daß ein zusätzlicher Stecker vorgesehen sein muß; weiterhin ist ein zusätzlicher Zugang zum Sensor 2 notwendig. Darüber hinaus kann die Vorrichtung nur dann im Ex-Bereich eingesetzt werden, wenn auch das zweite Bussystem 6 entsprechend ex-fähig ausgestaltet wird. Die schnellere Kommunikation wird also mit einem erhöhten Aufwand erkauft.

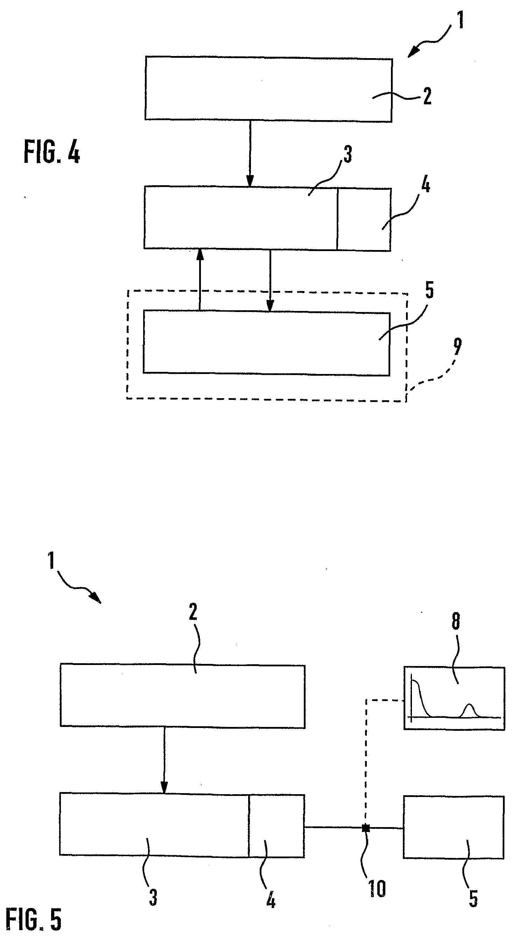

In Fig. 4 ist eine schematische Darstellung einer dritten Ausgestaltung der erfindungsgemäßen Vorrichtung gezeigt, die dann eingesetzt werden kann, wenn eine online-Auswertung der Daten nicht erforderlich ist. Bei dieser Ausgestaltung ist die Speichereinheit 5 für Historiendaten als entnehmbare Kompakteinheit 9 ausgebildet. Hierdurch ist es möglich, die aufgezeichneten Daten zwecks Auswertung und/oder nachträglicher Analyse an einen beliebigen Ort zu verschicken. Ein weiterer Vorteil dieser Ausführungsform ist darin zu sehen, daß die Kommunikation über das Bussystem 6 mit der Übermittlung der Historiendaten nicht belastet wird. Es versteht sich von selbst, daß die Ausgestaltung des Historienspeichers 5 als entnehmbare Kompakteinheit 9 auch in Verbindung mit den übrigen Ausführungsformen der erfindungsgemäßen Vorrichtung verwendet werden kann.

Eine vierte Ausgestaltung der erfindungsgemäßen Vorrichtung ist in Fig. 5 dargestellt. Über die Schnittstelle 10 kann hier wahlweise die Speichereinheit 5 für Historiendaten oder eine Eingabe-/Ausgabeeinheit 8, z.B. ein Vorort-display, an die Meß-/Regel-/Steuereinheit 3 angeschlossen werden. Vorteil dieser Ausgestaltung ist, daß kein zusätzlicher Stecker für den Historien-speicher 5 vorzusehen ist. Ein kleiner Nachteil dieser Ausgestaltung ist allerdings darin zu sehen, daß ein gleichzeitiger Betrieb von Eingabe-/Ausgabeeinheit 8 und Hstorienspeicher 5 nicht möglich ist.

Wie bereits zuvor dargelegt, bringt die erfindungsgemäße Vorrichtung eine Vielzahl von Vorteilen insbesondere im Hinblick auf Fehlererkennung, auf die Fehlerfrüherkennung (Predictive Maintenance), usw. Erstmals wird es jedoch auch möglich, Meßdaten graphisch darzustellen. Insbesondere ist hier die Darstellung der Echokurve zu erwähnen, die bei Laufzeitverfahren zur Bestimmung und/oder Überwachung des Füllstandes ausgewertet wird. Auf einem Vorort-Display 8 oder an einer entfernten Kontrollstelle 7 kann der Betreiber visuell die Füllstandsänderung in einem Behälter 12 anhand der Verschiebung des Nutzechosignals entlang der x-Achse verfolgen. Diese Möglichkeit der Visualisierung erhöht das Vertrauen des Betreibers in eine Technologie, bei der der Füllstand über die Laufzeit von hochfrequenten Meßsignalen oder von Ultraschall-Signalen detektiert wird.

Selbstverständlich wird die Erfindung auch darin gesehen, daß die aktuellen Meßdaten an der Eingabe-/Ausgabeeinheit 8 angezeigt bzw. bereitgestellt werden. Bei den aktuellen Meßdaten handelt es sich bevorzugt um die Echokurve.

In Fig. 6 ist die typische Echokurve eines TDR-Sensors dargestellt. Die Echokurve repräsentiert - wie bereits an vorhergehender Stelle erläutert - die Echo-Amplituden eines Meßsignals in Abhängigkeit von dem Weg, den das Meßsignal an dem Oberflächenwellenleiter 17 entlang zurücklegt, bzw. in Abhängigkeit von der entsprechenden Laufzeit.

Der erste Peak in unmittelbarerer Nähe zum Koordinatenursprung repräsentiert den sog. Fiducial Launcher. Dieser Peak wird durch einen Impedanzsprung und eine hierdurch verursachte teilweise Reflexion des Meßsignals beim Übergang von der Einkoppeleinheit 19 auf den Oberflächen-wellenleiter 17 verursacht.

Der Peak, der am weitesten von dem Koordinatenursprung entfernt ist, repräsentiert den End-of-Line Peak, also den Peak, der den Teil des Meßsignals wiedergibt, der am freien Ende des Oberflächenwellenleiters 17 reflektiert wird. Der deutliche Peak zwischen Fiducial Launcher und End-of-Line Peak stellt das Nutzechosignal dar. Das Nutzechosignal ist ein Maß für den Füllstand des Mediums 11 in dem Behälter 12. Infolge des Impedanzsprungs zwischen zwei Medien - im Normalfall handelt es sich um Luft und ein festes oder flüssiges in dem Behälter 12 gelagertes Füllgut - wird ein Teil des Meßsignals reflektiert. Aufgrund der Laufzeit bzw. der Entfernung, die aus dem Abstand zwischen einem definierten Startpunkt und dem Peak des Nutzechosignals ermittelt wird, läßt sich der Füllstand bestimmen.

Während der Fiducial Launcher und der End-of-Line Peak systemabhängige Echosignale darstellen, die keine Abhängigkeit von dem jeweiligen Füllstand aufweisen, ändert sich die Lage des Nutzechosignals in Abhängigkeit von dem jeweiligen Füllstand: Bei geringem Füllstand bewegt sich das Nutzechosignal in Richtung des End-of-Line Peaks; bei steigendem Füllstand bewegt sich das Nutzechosignal in Richtung des Fiducial Launchers.

Es versteht sich von selbst, daß im Falle von frei abgestrahlten Meßsignalen der End-of-Line Peak in der Echokurve nicht auftritt. Allerdings kann hier ein Peak, der durch die Reflexion des Meßsignals am Behälterboden verursacht wird auftreten. Auch hier ändert sich die Lage des Nutzechosignals natürlich in Abhängigkeit von dem Füllstand des Mediums 11 in dem Behälter 12. Der Peak des Nutzechosignals verschiebt sich daher entlang der x-Achse, auf der entweder die Zeit oder der zurückgelegte Weg aufgetragen ist. Bei den über eine Antenne frei abgestrahlten Meßsignalen kann es sich um Ultraschall- oder Mikrowellensignale handeln. Selbstverständlich können Füllstandsmeß-geräte 16 eingesetzt werden, die auf der Basis des Puls-Laufzeitverfahren oder des FMCW-Verfahrens arbeiten.

Wird nun auf einer pixelorientierten Ausgabeeinheit 8 jeweils die aktuelle Echokurve angezeigt, so wird dem Bedienpersonal optisch eine Änderung des Füllstands angezeigt. In vielen Fällen wächst hierdurch das Vertrauen des Bedienpersonals in das Meßgerät, da eine Änderung des Füllstands nicht einfach in Form einer Änderung eines Ziffernwertes angezeigt wird, sondern anhand eines Signals, das sich räumlich in Abhängigkeit von einem sich ändernden Füllstand verschiebt.

### Bezugszeichenliste

- 1: erfindungsgemäße Vorrichtung
- 2: Sensor
- 3: Meß-/Regel-/Steuereinheit
- 4: Speichereinheit für aktuelle Daten
- 5: Speichereinheit für Historien-Daten
- 6: Bussystem
- 7: Kontrollstelle
- 8: Eingabe-/Ausgabeeinheit
- 9: Entnehmbare Kompakteinheit
- 10: Schnittstelle
- 11: Medium
- 12: Behälter
- 13: Oberfläche
- 14: Öffnung
- 15: Deckel
- 16: Füllstandsmeßgerät
- 17: Oberflächenwellenleiter
- 18: Signalerzeugungseinheit
- 19: Einkoppeleinheit

## Patentansprüche

1. Vorrichtung zur Bestimmung und/oder Überwachung des Füllstands eines Mediums in einem Behälter mit einem Sensor, der den Füllstand anhand der Laufzeit von Meßsignalen ermittelt, mit einer Meß-/Regel-/Steuereinheit (3), die zumindest ein zu bestimmendes oder zu überwachendes Ereignis vorgibt, mit zumindest einer Speichereinheit (4; 5), die eine Speicherung von Meßdaten in Abhängigkeit von dem zumindest einen vorgegebenen Ereignis vornimmt, mit einer Ausgabeeinheit (8), die so ausgestaltet ist, daß sie eine pixelorientierte Darstellung von aktuellen Meßdaten bereitstellt, wobei es sich bei der Darstellung der aktuellen Meßdaten um die Echokurve oder um eine Größe handelt, die aus der Echokurve abgeleitet ist, wobei die Echokurve die Amplituden der Meßsignale in Abhängigkeit von der Laufzeit oder dem Laufweg wiedergibt, und wobei der Sensor, die Meß-/Regel-/Steuereinheit (3) und die Speichereinheit (4; 5) eine kompakte Einheit bzw. ein eigenständiges Feldgerät bilden.

2. Vorrichtung nach Anspruch 1,
wobei es sich bei dem zu bestimmenden oder zu überwachenden Ereignis um den Ablauf eines vorgegebenen Zeitintervalls bzw. eines vorgegebenen Zeitschemas handelt.

3. Vorrichtung nach Anspruch 1,
wobei es sich bei dem zu bestimmenden oder zu überwachenden Ereignis um das Erreichen eines definierten Meßwertzustandes oder um das Erreichen eines definierten System- oder Fehlerzustandes handelt.

4. Vorrichtung nach Anspruch 1, 2 oder 3,
wobei in der Speichereinheit (4, 5) sowohl die aktuellen Meßwert- und/oder Systeminformationen als auch die entsprechenden Meßwert- und/oder Systeminformationen, die sog. Historiendaten abgespeichert sind, die innerhalb eines definierten zurückliegenden Zeitbereichs aufgetreten sind,

5. Vorrichtung nach einem oder mehreren der vorhergehenden Ansprüche,
wobei ein Bussystem (6) vorgesehen ist, über das die Meß-/Regel-/Steuereinheit (3) oder die Speichereinheit (4; 5) mit einer entfernten Kontrollstelle (7) kommuniziert.

6. Vorrichtung nach Anspruch 5,
wobei sowohl die aktuellen Meßdaten als auch die Historiendaten über das Bussystem (6) an die entfernte Kontrollstelle (7) übertragen werden.

7. Vorrichtung nach Anspruch 1 bis 4,
wobei die Speichereinheit (5) für die Historiendaten als entnehmbare Kompakteinheit (9) ausgestaltet ist.

8. Vorrichtung nach Anspruch 1 bis 4,
wobei an der Meß-/Regel-/Steuereinheit (3) eine Schnittstelle (10) vorgesehen ist, über die wahlweise eine Ein-/Ausgabeeinheit (8) oder die Speichereinheit (5) für die Historiendaten mit der Meß-/Regel-/Steuereinheit (3) verbindbar ist.

9. Vorrichtung nach einem oder mehreren der vorhergehenden Ansprüche,
wobei die Meß-/Regel-/Steuereinheit (3) anhand der Historiendaten, die die Speichereinheit (5) bereitstellt, eine Fehleranalyse und/oder Ursachenanalyse und/oder eine Vorsorgeanalyse durchführt und dem Bedienpersonal zur Verfügung stellt.

10. Vorrichtung nach Anspruch 1,
wobei die Ausgabeeinheit (8) eine pixelorientierte Darstellung von Zwischenergebnissen, von Historiendaten und/oder Analysedaten bereitstellt.

11. Vorrichtung nach Anspruch 9 oder 10,
wobei es sich bei der Darstellung von Historiendaten um die zeitliche Änderung des Füllstandes eines Mediums (11) in einem Behälter (12) handelt.

## Claims

1. Unit designed for determining and/or monitoring the level of a medium in a vessel with a sensor, which determines the level on the basis of the time-of-flight of measuring signals, with a measurement/regulation/control unit (3), which specifies at least one event to be determined or monitored, with at least one memory unit (4, 5), which saves measurement data depending on the at least one prespecified event, with an output unit (8), which is designed in such a way that it provides a pixel-oriented representation of current measured data, wherein the representation of the current measured data concerns the echo curve or a variable derived from the echo curve, wherein the echo curve reproduces the amplitudes of the measurement signals depending on the time-of-flight or the path, and wherein the sensor, the measurement/regulation/control unit (3) and the memory unit (4, 5) form a compact unit or an independent field device.

2. Unit as claimed in Claim 1,
wherein the event to be determined or monitored concerns the development of a predefined interval or a predefined time pattern.

3. Unit as claimed in Claim 1,
wherein the event to be determined or monitored concerns reaching a defined measured value state or reaching a defined system or error condition.

4. Unit as claimed in Claim 1, 2 or 3,
wherein the memory unit (4, 5) stores both the current measured value information and/or system information and the measured value information and/or system information which occurred during a defined time period in the past, known as the history data.

5. Unit as claimed in one or more of the previous claims,
wherein a bus system (6) is provided, via which the measurement/regulation/control unit (3) or the memory unit (4, 5) communicates with a remote control point (7).

6. Unit as claimed in Claim 5,
wherein both the current measured data and the history data are transmitted to the remote control point (7) via the bus system (6).

7. Unit as claimed in Claim 1 to 4,
wherein the memory unit (5) for the history data is designed as a removable compact unit (9).

8. Unit as claimed in Claim 1 to 4,
wherein an interface (10) is provided at the measurement/regulation/control unit (3), via which it is possible to connect either an input/output unit (8) or the memory unit (5) for the history data (5) to the measurement/regulation/control unit (3).

9. Unit as claimed in one or more of the previous claims,
wherein the measurement/regulation/control unit (3) performs an error analysis and/or cause analysis and/or preventive analysis using the history data that the memory unit (5) provides and makes the results of the analysis available to the operating staff.

10. Unit as claimed in Claim 1,
wherein the output unit (8) makes available a pixel-oriented representation of intermediate results, history data and/or analytical data.

11. Unit as claimed in Claims 9 or 10,
wherein the representation of history data concerns the change over time of the level of a medium (11) in a vessel (12).

## Revendications

1. Dispositif destiné à la détermination et/ou la surveillance du niveau d'un produit au sein d'un réservoir avec un capteur, qui détermine le niveau au moyen du temps de propagation de signaux de mesure, avec une unité de mesure / régulation / commande (3), qui spécifie au moins un événement à déterminer ou à surveiller, avec au moins une unité de mémoire (4, 5), qui procède à un enregistrement de données de mesure en fonction de l'au moins un événement spécifié, avec une unité de sortie (8), qui est conçue de telle sorte à mettre à disposition une représentation orientée pixel de données de mesure actuelles, où il s'agit, concernant la représentation de données de mesure actuelles, de la courbe d'écho ou d'une grandeur dérivée de la courbe d'écho, la courbe d'écho reproduisant les amplitudes des signaux de mesure en fonction du temps de propagation ou du parcours, et le capteur, l'unité de mesure / régulation / commande (3) et l'unité de mémoire (4, 5) constituant une unité compacte ou un appareil de terrain autonome.

2. Dispositif selon la revendication 1,
pour lequel il s'agit, concernant l'événement à déterminer ou à surveiller, de l'évolution d'un intervalle de temps prédéfini ou d'un schéma temporel prédéfini.

3. Dispositif selon la revendication 1,
pour lequel il s'agit, concernant l'événement à déterminer ou à surveiller, de l'atteinte d'un état de mesure défini ou de l'atteinte d'un état de système ou d'erreur défini.

4. Dispositif selon la revendication 1, 2 ou 3,
pour lequel sont enregistrées dans l'unité de mémoire (4, 5) aussi bien les informations de mesure et/ou de système actuelles que les informations de mesure et/ou de système correspondantes, les dites données historiques, qui sont apparues au sein d'une plage de temps révolue définie.

5. Dispositif selon l'une ou plusieurs des revendications précédentes,
pour lequel est prévu un système de bus (6), par l'intermédiaire duquel communique l'unité de mesure / régulation / commande (3) ou l'unité de mémoire (4, 5) avec un poste de contrôle distant (7).

6. Dispositif selon la revendication 5,
pour lequel à la fois les données de mesure actuelles et les données historiques sont transmises par l'intermédiaire du système de bus (6) au poste de contrôle distant (7).

7. Dispositif selon la revendication 1 à 4,
pour lequel l'unité de mémoire (5) relative aux données historiques est conçue en tant qu'unité compacte (9) amovible.

8. Dispositif selon la revendication 1 à 4,
pour lequel est prévue, sur l'unité de mesure / régulation / commande (3), une interface (10), par l'intermédiaire de laquelle il est possible de relier avec l'unité de mesure / régulation / commande (3), au choix, une unité d'entrée / sortie (8) ou l'unité de mémoire (5) relative aux données historiques.

9. Dispositif selon l'une ou plusieurs des revendications précédentes,
pour lequel l'unité de mesure / régulation / commande (3) exécute, à l'appui des données historiques mises à la disposition de l'unité de mémoire (5), une analyse des erreurs et/ou une analyse des causes et/ou une analyse préventive, et met les résultats à la disposition du personnel de service.

10. Dispositif selon la revendication 1,
pour lequel l'unité de sortie (8) met à disposition une représentation orientée pixel de résultats intermédiaires, de données historiques et/ou de données d'analyse.

11. Dispositif selon la revendication 9 ou 10,
pour lequel il s'agit, concernant la représentation, de données historiques relatives à l'évolution dans le temps du niveau d'un produit (11) au sein d'un réservoir (12).
